# EUROPÄISCHE PATENTANMELDUNG

(11) **EP 4 299 364 A1**
(43) Veröffentlichungstag der Anmeldung: **03.01.2024**
(21) Anmeldenummer: 22182289.3
(22) Anmeldetag: 30.06.2022
(51) Int. Cl.: B60L 53/63, B60L 53/66, B60L 58/12, G06Q 10/06

(54) **VORRICHTUNG UND VERFAHREN ZUR ERMITTLUNG VON VORHERSAGEDATEN EINES LADEVORGANGS EINES ELEKTRISCHEN FAHRZEUGES**

(71) Anmelder: Siemens Aktiengesellschaft, 80333 München (DE)
(72) Erfinder: Beyer, Dagmar, 80339 München (DE); Duckheim, Mathias, 91052 Erlangen (DE); Merk, Stephan, 80804 München (DE); Metzger, Michael, 85570 Markt Schwaben (DE); Stursberg, Paul, 80538 München (DE)
(74) Vertreter: Siemens Patent Attorneys

(57) **Zusammenfassung**

Es wird eine Vorrichtung (1) zur Ermittlung von Vorhersagedaten eines Ladevorgangs eines elektrischen Fahrzeuges (2) vorgeschlagen, wobei die Vorrichtung (1) eine Vorhersageeinheit (10) umfasst, die dazu ausgebildet ist, basierend auf übermittelten Daten eine Ladevorrichtung zu bestimmen und eine Startzeit sowie eine Ladedauer des Ladevorgangs an der genannten Ladevorrichtung sowie weitere Ladeparameter als Vorhersagedaten zu ermitteln. Die Vorrichtung (1) ist dadurch gekennzeichnet, dass die Vorrichtung (1) eine erste Datenschnittstelle (101) zu einem Reservierungssystem (11) und eine zweite Datenschnittstelle (102) zu einem Navigationssystem (12) des elektrischen Fahrzeuges umfasst, wobei die erste Datenschnittstelle (101) dazu ausgebildet ist, von dem Reservierungssystem (11) Reservierungsdaten bezüglich der Ladevorrichtung zu empfangen, und die zweite Datenschnittstelle (102) dazu ausgebildet ist, von dem Navigationssystem (12) Navigationsdaten über eine aktuelle oder geplante Fahrt des elektrischen Fahrzeuges (2) zu empfangen, wobei die Vorhersageeinheit (10) dazu ausgebildet ist, aus den empfangen Reservierungsdaten und Navigationsdaten die Vorhersagedaten zu ermitteln.

Weiterhin betrifft die Erfindung ein elektrisches Fahrzeug (2) sowie ein Verfahren zur Ermittlung von Vorhersagedaten eines Ladevorgangs eines elektrischen Fahrzeuges (2).

## Beschreibung

Die Erfindung betrifft eine Vorrichtung gemäß dem Oberbegriff des Patentanspruches 1, ein elektrisches Fahrzeug gemäß dem Oberbegriff des Patentanspruches 11 sowie ein Verfahren gemäß dem Oberbegriff des Patentanspruches 14.

Die Zunahme der E-Mobilität und hiermit das Laden von elektrischen Fahrzeugen, insbesondere E-Autos, erhöhen die Belastung der Stromnetze und die Variabilität der Lastmuster erheblich. Bestehende Stromnetze sind jedoch nicht auf diese neuen Lastmuster ausgelegt und dezentrale erneuerbare Erzeugung, beispielsweise durch Photovoltaikanlagen, können die bestehenden Stromnetze an ihre physikalischen Grenzen bringen und gegebenenfalls zu Netzüberlastungen und Netzqualitätsproblemen führen.

Zur Lösung der genannten Herausforderungen existieren grundsätzlich zwei Möglichkeiten. Zum einen kann ein physischer Netzausbau erfolgen, beispielsweise durch eine Verstärkung von Transformatoren und Stromkabeln. Allerdings ist dies zeitlich aufwendig und kostenintensiv. Zum anderen kann eine intelligente Regelung oder Steuerung von Transformatoren und dezentralen Energieanlagen (englisch: Decentralized Energy Resources; DER) erfolgen, die zu einer Netzstabilisierung führt.

Für eine solche intelligente Steuerung ist jedoch typischerweise ein Netzzustand und/oder eine Vorhersage beziehungsweise Prognose des Netzzustandes, variabler Lasten und bezüglich der dezentralen Erzeugung erforderlich. Insbesondere im Hinblick auf Lade-Wallboxen für Privathaushalte und kleinere öffentliche Ladestationen, die zukünftig eine maßgebliche Last für die Stromnetze darstellen, ist eine solche kurzfristige Vorhersage für eine intelligente Regelung der Stromnetze erforderlich.

Der vorliegenden Erfindung liegt die Aufgabe zugrunde, für eine intelligente Regelung von Stromnetzen eine Vorhersage bezüglich des Ladens von elektrischen Fahrzeugen an Ladevorrichtungen bereitzustellen.

Die Aufgabe wird durch eine Vorrichtung mit den Merkmalen des unabhängigen Patentanspruches 1, durch ein elektrisches Fahrzeug mit den Merkmalen des unabhängigen Patentanspruches 11 sowie durch ein Verfahren mit den Merkmalen des unabhängigen Patentanspruches 14 gelöst. In den abhängigen Patentansprüchen sind vorteilhafte Ausgestaltungen und Weiterbildungen der Erfindung angegeben.

Die erfindungsgemäße Vorrichtung zur Ermittlung von Vorhersagedaten eines Ladevorgangs eines elektrischen Fahrzeuges, umfasst eine Vorhersageeinheit, die dazu ausgebildet ist, basierend auf übermittelten Daten, eine Ladevorrichtung zu bestimmen und eine Startzeit sowie eine Ladedauer des Ladevorgangs an der genannten Ladevorrichtung sowie weitere Ladeparameter als Vorhersagedaten zu ermitteln. Die erfindungsgemäße Vorrichtung ist dadurch gekennzeichnet, dass die Vorrichtung eine erste Datenschnittstelle zu einem Reservierungssystem und eine zweite Datenschnittstelle zu einem Navigationssystem des elektrischen Fahrzeuges umfasst, wobei die erste Datenschnittstelle dazu ausgebildet ist, von dem Reservierungssystem Reservierungsdaten bezüglich der Ladevorrichtung zu empfangen, und die zweite Datenschnittstelle dazu ausgebildet ist, von dem Navigationssystem Navigationsdaten über eine aktuelle oder geplante Fahrt des elektrischen Fahrzeuges zu empfangen, wobei die Vorhersageeinheit dazu ausgebildet ist, aus den empfangenen Reservierungsdaten und Navigationsdaten die Vorhersagedaten zu ermitteln.

Das elektrische Fahrzeug ist insbesondere ein elektrisches Auto (E-Auto), ein elektrisches Motorrad oder ein Speed-Pedelec.

Die Datenschnittstellen können drahtgebunden und/oder drahtlos, beispielsweise mittels WLAN, Mobilfunknetz und/oder Bluetooth, ausgebildet sein. Weiterhin können die Datenschnittstellen unidirektional oder bidirektional ausgestaltet sein.

Die Vorhersageeinheit kann zur Ermittlung der Vorhersagedaten eine Recheneinheit, beispielsweise einen Prozessor, umfassen.

Die Ladevorrichtung ist insbesondere eine Ladesäule oder eine Lade-Wallbox.

Gemäß der vorliegenden Erfindung ist die Vorrichtung dazu ausgebildet, Reservierungsdaten und Navigationsdaten zu empfangen und aus den empfangenen Daten die Vorhersagedaten zu ermitteln. Die Vorhersagedaten umfassen hierbei wenigstens Informationen zum Ladeort (Ladevorrichtung), eine Startzeit, wann das Laden des elektrischen Fahrzeuges beginnen soll, sowie eine Ladedauer des Ladevorgangs am Ladeort (Ladevorrichtung) sowie weitere Ladeparameter, beispielsweise eine Ladeleitung und/oder Ladeprofile. Die genannten Daten (Vorhersagedaten) werden durch die Vorrichtung basierend auf den Reservierungsdaten und den Navigationsdaten ermittelt. Mit anderen Worten ist aus den Reservierungsdaten und den Navigationsdaten zumindest mit einer bestimmten Wahrscheinlichkeit bekannt, wo der Ladevorgang, wann der Ladevorgang und wie lange der Ladevorgang des elektrischen Fahrzeuges erfolgt. Durch diese Daten, die die Vorrichtung empfängt und dadurch die Vorhersagedaten ermittelt, kann eine verbesserte Netzbetriebsführung erfolgen, wenn die Vorhersagedaten beispielsweise einem Netzbetreiber zur Verfügung gestellt werden. Das ist deshalb der Fall, da eine Netzleittechnik des Netzbetreibers basierend auf den ermittelten Vorhersagedaten eine verbesserte Vorhersage bezüglich des Stromnetzes, bezüglich seiner lokalen Auslastung sowie bezüglich seines Netzzustandes erfolgen kann. Mit anderen Worten erfolgt durch die Netzleittechnik eine Netzzustandsrechnung, die die übermittelten Vorhersagedaten verwendet. Dadurch können Netzengpässe und/oder Probleme mit der Netzqualität vorab erkannt, abgemildert oder bestenfalls verhindert werden. Hierbei weist die Vorrichtung den Vorteil auf, dass diese vorab und zunächst unabhängig vom Netzbetreiber die hierzu relevanten Daten sammelt und zu einem Datensatz, den Vorhersagedaten, zusammenführt und aufbereitet.

Das erfindungsgemäße elektrische Fahrzeug, insbesondere E-Auto, ist dadurch gekennzeichnet, dass dieses eine Vorrichtung gemäß der vorliegenden Erfindung und/oder einer ihrer Ausgestaltungen umfasst.

Es ergeben sich zur erfindungsgemäßen Vorrichtung gleichwertige und gleichwirkende Vorteile und/oder Ausgestaltungen des erfindungsgemäßen elektrischen Fahrzeuges.

Das erfindungsgemäße Verfahren zur Ermittlung von Vorhersagedaten eines Ladevorgangs eines elektrischen Fahrzeuges mittels einer Vorrichtung gemäß der vorliegenden Erfindung und/oder einer ihrer Ausgestaltungen, wobei die Vorrichtung eine Vorhersageeinheit umfasst, die dazu ausgebildet ist, basierend auf übermittelten Daten, eine Ladevorrichtung, eine Startzeit sowie eine Ladedauer des Ladevorgangs an der genannten Ladevorrichtung und weitere Ladeparameter als Vorhersagedaten zu ermitteln, ist gekennzeichnet dadurch, dass die Vorrichtung eine erste Datenschnittstelle zu einem Reservierungssystem und eine zweite Datenschnittstelle zu einem Navigationssystem des elektrischen Fahrzeuges umfasst, wobei über die erste Datenschnittstelle von dem Reservierungssystem Reservierungsdaten bezüglich der Ladevorrichtung empfangen werden, und über die zweite Datenschnittstelle von dem Navigationssystem Navigationsdaten über eine aktuelle oder geplante Fahrt des elektrischen Fahrzeuges empfangen werden, wobei mittels der Vorhersageeinheit aus den empfangenen Reservierungsdaten und Navigationsdaten die Vorhersagedaten ermittelt werden.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein. Beispielsweise wird das Verfahren durch die erfindungsgemäße Vorrichtung, die als Rechenvorrichtung ausgebildet sein kann, durchgeführt.

Es ergeben sich zur erfindungsgemäßen Vorrichtung gleichwertige und gleichwirkende Vorteile und/oder Ausgestaltungen des erfindungsgemäßen Verfahrens.

Gemäß einer vorteilhaften Ausgestaltung der Erfindung ist die Vorhersageeinheit dazu ausgebildet, die ermittelten Vorhersagedaten an eine Netzleittechnik eines Stromnetzes, an welchem die gemäß den Vorhersagedaten ermittelte Ladevorrichtung angebunden ist, zur Netzbetriebsführung zu übermitteln.

Mit anderen Worten übermittelt die Vorhersageeinheit die ermittelten Vorhersagedaten zur Netzbetriebsführung an eine Netzleittechnik beziehungsweise an eine Netzleiteinheit eines Stromnetzes, an welchem die gemäß den Vorhersagedaten ermittelte Ladevorrichtung angebunden ist. Hierbei erfolgt die Netzbetriebsführung bevorzugt basierend auf den übermittelten Vorhersagedaten.

Dadurch kann vorteilhafterweise mittels der Netzleittechnik des Netzbetreibers basierend auf den ermittelten und übermittelten Vorhersagedaten eine verbesserte Vorhersage bezüglich des Stromnetzes und seiner lokalen Auslastung erfolgen. Weiterhin können dadurch Netzengpässe und/oder Probleme mit der Netzqualität vorab besser erkannt, abgemildert oder bestenfalls verhindert werden.

In einer vorteilhaften Weiterbildung der Erfindung ist die Vorhersageeinheit dazu ausgebildet, die ermittelten Vorhersagedaten an die gemäß den Vorhersagedaten ermittelte Ladevorrichtung zu übermitteln.

Mit anderen Worten übermittelt die Vorrichtung einen Hinweis an die Ladevorrichtung, dass diese für das zukünftige Laden vorgesehen ist und teilt dieser zudem den vorgesehenen Startzeitpunkt, die vorgesehene Ladedauer sowie weitere vorgesehene Ladeparameter, beispielswiese die vorgesehene Ladeleistung und/oder Ladeprofile des elektrischen Fahrzeuges, mit.

Dadurch ist die Ladevorrichtung vorteilhafterweise vorab in Kenntnis der zukünftigen Ladevorgänge.

Gemäß einer vorteilhaften Ausgestaltung der Erfindung umfassen die Reservierungsdaten einen reservierten Ladezeitbereich für die Ladevorrichtung.

Vorteilhafterweise ist dadurch der Startzeitpunkt sowie die Ladedauer des elektrischen Fahrzeuges an der Ladevorrichtung bekannt und festgelegt. Dadurch werden die Vorhersagedaten bezüglich ihrer Qualität verbessert, da es dadurch wahrscheinlicher ist, dass der Ladevorgang gemäß den ermittelten Vorhersagedaten erfolgt.

In einer vorteilhaften Weiterbildung der Erfindung umfassen die Navigationsdaten einen Anfangsort der Fahrt, einen Zielort der Fahrt, eine Ankunftszeit und/oder einen Startwert, dass die Ladevorrichtung festgelegt beziehungsweise ausgewählt wurde und die Navigation zur genannten Ladevorrichtung begonnen hat.

Dadurch werden vorteilhafterweise die Vorhersagedaten bezüglich ihrer Qualität weiter verbessert.

Gemäß einer vorteilhaften Ausgestaltung der Erfindung ist die Vorhersageeinheit dazu ausgebildet, über die erste Datenschnittstelle die Reservierungsdaten vom Reservierungssystem und/oder über die zweite Datenschnittstelle die Navigationsdaten vom Navigationssystem anzufordern.

Mit anderen Worten kann die Vorhersageeinheit vorteilhafterweise die genannten Systeme dazu auffordern, die jeweiligen genannten Daten an diese zu übermitteln. Dadurch kann die Vorrichtung das Übermitteln der Daten dann einleiten, wenn diese auch tatsächlich erforderlich sind. Dadurch werden vorteilhafterweise Datenströme reduziert beziehungsweise nur dann verwendet, wenn diese erforderlich sind, beispielsweise wenn ein Ladevorgang kurz bevorsteht.

In einer vorteilhaften Weiterbildung der Erfindung umfasst die Vorrichtung eine dritte Datenschnittstelle zu einem Energiemanagementsystem des Fahrzeuges, wobei die dritte Datenschnittstelle dazu ausgebildet ist, wenigstens einen Ladezustand und/oder ein Ladeprofil des Fahrzeuges als Ladeparameter zu empfangen und anzufordern.

Vorteilhafterweise kann die Vorrichtung dadurch weitere für den Ladevorgang relevanten Daten von dem Energiemanagementsystem des Fahrzeuges empfangen und anfordern, wodurch die Qualität der Vorhersagedaten weiter verbessert wird. Das ist insbesondere deshalb der Fall, da dadurch festgelegt ist, welche Ladeleistung und welche Ladedauer voraussichtlich für das jeweilige elektrische Fahrzeug zu erwarten sind. Hierbei sind Ladeprofil, beispielsweise Ladeleistung über die Zeit, und Ladedauer voneinander abhängig. So kann eine kürzere Ladedauer durch eine höhere Ladeleistung und eine längere Ladedauer durch eine verringerte Ladeleistung erreicht werden. Welche Ladeleistung zu welchem Zeitpunkt zu erwarten ist, ist jedoch für die Regelung des Stromnetzes von Bedeutung. Je genauer diese genannten Daten vorhergesagt werden können, desto besser kann die Netzbetriebsführung erfolgen. Somit ist es vorteilhaft, dass die Vorrichtung die genannten Daten von dem Energiemanagementsystem des elektrischen Fahrzeuges empfängt, bearbeitet und an die Netzleittechnik des Stromnetzes übermittelt.

Gemäß einer vorteilhaften Ausgestaltung der Erfindung ist die Vorhersageeinheit dazu ausgebildet, aus dem Ladezustand und den Navigationsdaten einen Ladezustand des Fahrzeuges bei Ankunft des Fahrzeuges an der Ladevorrichtung zu bestimmen.

Aus dem Ladezustand bei Ankunft kann vorteilhafterweise die erforderliche Lademenge und somit die Ladedauer ermittelt werden. Hierbei ist die Vorrichtung ebenfalls in Kenntnis über die Ladekapazität des elektrischen Fahrzeuges beziehungsweise des Energiespeichers des elektrischen Fahrzeuges. Die Ladekapazität, das heißt die Gesamtkapazität des Energiespeichers, kann ebenfalls von dem Energiemanagementsystem durch die dritte Schnittstelle empfangen werden. Mit anderen Worten übermittelt das Energiemanagementsystem die Gesamtkapazität über die dritte Datenschnittstelle an die Vorrichtung und somit an die Vorhersageeinheit.

In einer vorteilhaften Weiterbildung der Erfindung ist die Vorrichtung dazu ausgebildet, weitere ladespezifische Daten, insbesondere Schnellladedaten, als Ladeparameter zu empfangen und anzufordern.

Dadurch werden die Vorhersagedaten vorteilhafterweise weiter in ihrer Qualität verbessert, sodass eine verbesserte Netzbetriebsführung erfolgen kann.

Gemäß einer vorteilhaften Ausgestaltung der Erfindung umfasst die Vorrichtung eine vierte Datenschnittstelle zu einem Kalendersystem des Fahrzeuges, wobei die vierte Datenschnittstelle dazu ausgebildet ist, Kalenderdaten von dem Kalendersystem als Ladeparameter zu empfangen und anzufordern.

Dadurch werden die Vorhersagedaten vorteilhafterweise weiter in ihrer Qualität verbessert, sodass eine verbesserte Netzbetriebsführung erfolgen kann. Das ist deshalb der Fall, da durch den Kalender geplante Fahrten ermittelt und dadurch Ladeorte, Ladedauern sowie Ladeparameter durch die Vorhersageeinheit verbessert bestimmt werden können.

In einer vorteilhaften Weiterbildung der Erfindung umfasst das Fahrzeug das Reservierungssystem, das Navigationssystem, das Energiemanagementsystem und/oder das Kalendersystem.

Hierbei können die genannten Systeme als Systemkomponenten des Fahrzeuges ausgebildet sein, und/oder auf einem Mobilfunkgerät, beispielsweise einem Smartphone, eines Benutzer des Fahrzeuges implementiert sein.

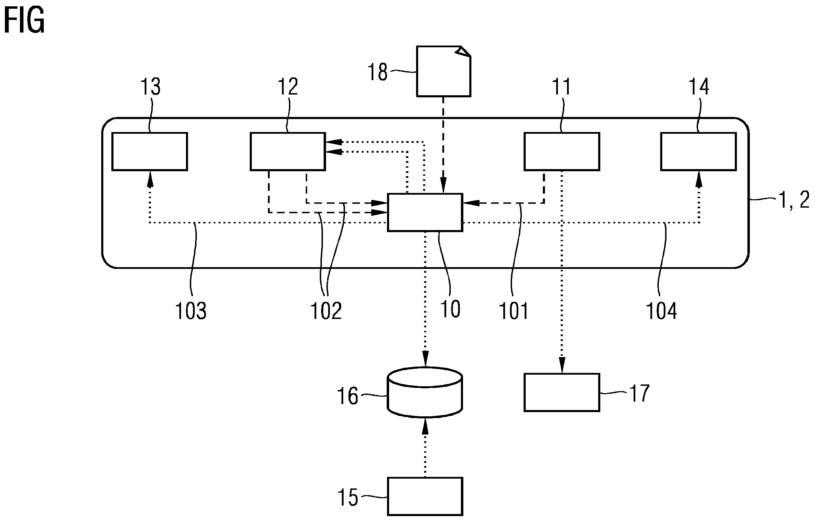

Weitere Vorteile, Merkmale und Einzelheiten der Erfindung ergeben sich aus den im Folgenden beschriebenen Ausführungsbeispielen sowie anhand der Zeichnung. Dabei zeigt die Figur schematisiert eine Vorrichtung gemäß einer Ausgestaltung der vorliegenden Erfindung.

Gleichartige, gleichwertige oder gleichwirkende Elemente können in einer der Figuren oder in den Figuren mit denselben Bezugszeichen versehen sein.

Die Figur zeigt eine schematisierte Vorrichtung 1 gemäß einer Ausgestaltung der vorliegenden Erfindung.

Gemäß der vorliegenden Ausgestaltung umfasst ein elektrisches Fahrzeug 2 die Vorrichtung 1.

Die Vorrichtung 1 umfasst eine Vorhersageeinheit 10 (englisch: Charging Procedure Prediction System), ein Reservierungssystem 11 für Ladevorgänge (englisch: Charging Reservation Client), ein Navigationssystem 12 (englisch: Navigation System), ein Energiemanagementsystem 13 (englisch: E-car Energy Management System) sowie ein Kalendersystem 14 (englisch: E-car Driver Calender).

Das Reservierungssystem 11 kann über eine erste Datenschnittstelle 101 der Vorrichtung 1 Daten, insbesondere Reservierungsdaten, mit der Vorhersageeinheit 10 austauschen. Insbesondere ist die Vorhersageeinheit 10 dazu ausgebildet, die Reservierungsdaten über die erste Datenschnittstelle 101 von dem Reservierungssystem 11 zu empfangen und von diesem anzufordern.

Das Navigationssystem 12 kann über eine zweite Datenschnittstelle 102 der Vorrichtung 1 Daten, insbesondere Navigationsdaten, mit der Vorhersageeinheit 10 austauschen. Insbesondere ist die Vorhersageeinheit 10 dazu ausgebildet, die Navigationsdaten über die zweite Datenschnittstelle 102 von dem Navigationssystem 12 zu empfangen und von diesem anzufordern.

Das Energiemanagementsystem 13 kann über eine dritte Datenschnittstelle 103 der Vorrichtung 1 Daten mit der Vorhersageeinheit 10 austauschen. Insbesondere ist die Vorhersageeinheit 10 dazu ausgebildet, einen Ladezustand und/oder ein Ladeprofil des Fahrzeuges über die dritte Datenschnittstelle 103 von dem Energiemanagementsystem 13 als Ladeparameter zu empfangen und von diesem anzufordern.

Das Kalendersystem 14 kann über eine vierte Datenschnittstelle 104 der Vorrichtung 1 Daten, insbesondere Kalenderdaten, mit der Vorhersageeinheit 10 austauschen. Insbesondere ist die Vorhersageeinheit 10 dazu ausgebildet, die Kalenderdaten über die zweite Datenschnittstelle 102 von dem Navigationssystem 12 als Ladeparameter zu empfangen und von diesem anzufordern.

Beispielsweise werden die Datenschnittstellen 101,...,104 durch Kommunikationsbusse des Fahrzeuges 2 ausgebildet. Ist die Vorrichtung 1 und/oder die Vorhersageeinheit 10 auf einem Smart-Device, beispielsweise auf einem Smartphone eines Benutzers des Fahrzeuges 2 implementiert, dann können die Datenschnittstellen 101,...,104 drahtlos ausgebildet sein, insbesondere mittels Bluetooth.

Weiterhin kann die Vorrichtung 1 zusätzliche Datenschnittstellen zu einer Netzleittechnik eines Netzbetreibers 15, einem lokalen Reservierungssystem 17 der Ladevorrichtung und/oder einem Vertragssystem 18, welches vertragsspezifische Ladeinformationen umfasst, aufweisen. Die genannten zusätzlichen Datenschnittstellen sind dazu geeignet, die genannten weiteren Daten mit den genannten weiteren Systemen auszutauschen und/oder von diesen anzufordern. Vor der Weiterleitung der Vorhersagedaten an die Netzleittechnik 15 können diese an ein weiteres Koordinierungssystem 17, welches die Vorhersagedaten mehrerer Vorrichtungen 1 beziehungsweise elektrischer Fahrzeuge 2 sammelt und aggregiert, übermittelt werden. Diese aggregierten Vorhersagedaten werden an die Netzleittechnik 15 durch das Koordinierungssystem 17 zur Netzbetriebsführung übermittelt. Hierbei kann die Netzleittechnik 15 die aggregierten Vorhersagedaten vom Koordinierungssystem 17 anfordern.

Das lokale Reservierungssystem 17 ist eine Komponente der Ladevorrichtung beziehungsweise des Ladebetreibers. Hierbei ermöglicht dieses, dass das elektrische Fahrzeug 2 beziehungsweise die elektrischen Fahrzeuge jeweils ein bestimmtes Zeitfenster für den Ladevorgang reservieren. Aus solchen Reservierungsdaten, die das Reservierungssystem 11 vom lokalen Reservierungssystem 17 anfordern kann, ist somit der Vorhersageeinheit 10 bekannt, an welcher Ladestation das Fahrzeug 2 geladen wird beziehungsweise geladen werden soll.

Das Navigationssystem 12 kann die Möglichkeit aufweisen nach Ladestationen beziehungsweise Ladevorrichtungen in der Nähe eines ausgewählten Ziels zu suchen. Sobald das Fahrzeug 2 mit dem Routen zu einer Ladestation beginnt, kann dies als deutlicher Hinweis auf die Ladestation (Ladeort) verwendet werden. Diese Information wird durch das Navigationssystem 12 an die Vorhersageeinheit 10 übermittelt.

Weiterhin kann das Navigationssystem 12 die bisherigen Routen des Fahrzeuges 2 analysieren und häufige Routen erkennen. Aus diesen häufigen Routen, dem bekannten Wohnort des Fahrers und der aktuellen Position des Fahrzeuges 2 kann das Navigationssystem 12 ermitteln, ob das Fahrzeug 2 voraussichtlich den Heimweg antritt, um dieses an seiner heimischen Wallbox oder an einer öffentlichen Ladestation in der Nähe des Heimatstandortes zu laden. Dies kann ebenfalls aus früheren Ladevorgängen durch das Navigationssystem 12 vorhergesagt und an die Vorhersageeinheit 10 übermittelt werden. Dadurch wird die Qualität der Vorhersagedaten weiter verbessert.

Wenn für das Fahrzeug 2 eine bestimmte Ladevorrichtung reserviert ist, ist das reservierte Zeitfenster Bestandteil der Reservierungsdaten. Die Ladestartzeit kann hierbei weiter genauer bestimmt werden, wenn der Fahrer die reservierte Ladestation als Ziel in das Navigationssystem 12 auswählt. Das Navigationssystem 12 berechnet dann die geschätzte Ankunftszeit. Eine weitere alternative oder ergänzende Möglichkeit ist, dass die Reservierungsdaten automatisch an das Navigationssystem 12, welches beispielsweise innerhalb des Fahrzeuges 2 fest installiert und/oder auf einem intelligenten Gerät (englische: Smart Device) installiert ist, weitergeleitet wird. Das Navigationssystem 12 kann dann die voraussichtliche Ankunftszeit berechnen.

Wenn keine Reservierung vorliegt und der Fahrer über das Navigationssystem 12 eine Ladestation als Ziel auswählt, kann die voraussichtliche Ankunftszeit ebenfalls durch das Navigationssystem 12 berechnet werden.

Wenn das Navigationssystem 12 erkennt, dass ein Fahrer wahrscheinlich auf dem Heimweg ist, kann es die voraussichtliche Ankunftszeit zu Hause berechnen. An seinem Heimatstandort wird das elektrische Fahrzeug 2 an einer privaten Wallbox und/oder an einer gemeinschaftlichen oder öffentlichen Ladestation in der Nähe aufgeladen. Die Vorhersage der Ankunftszeit kann weiter verbessert werden, indem Informationen aus dem Kalendersystem 14, beispielsweise ebenfalls auf dem Smartphone des Fahrers, verwendet werden. Beispielsweise kann das Kalendersystem 14 anzeigen, dass das Fahrzeug wohl nicht nach Hause fahren wird, sondern aufgrund eines Kalendereintrags (Kalenderdaten) einen anderen Termin und Zielort aufweist, beispielsweise ein Fitnessstudio.

Das Energiemanagementsystem 13 kennt den Ladezustand des Fahrzeuges 2. Zusammen mit den Navigationsdaten des Navigationssystems 12 kann der Ladezustand bei Ankunft an der Ladestation berechnet werden.

Das Energiemanagementsystem 13 hat weiterhin unterstützte Ladeprofile des elektrischen Fahrzeuges 2 und mit den Informationen über die Lademenge, die verfügbaren Ladeprofile und den Vertragsinformationen, beispielsweise ob ein Schnellladen zugelassen ist, gespeichert. Mit diesen weiteren Daten können die Ladelasten über den Ladevorgang und die Ladedauer verbessert berechnet werden.

Die Vorrichtung 1 beziehungsweise die Vorhersageeinheit 10 bilden ein Ladevorgangsvorhersagesystem aus, das laderelevante Daten, insbesondere Reservierungsdaten, Navigationsdaten und Ladeparameter, von weiteren Komponenten vom elektrischen Fahrzeug 2 und/oder auf Smart Devices, beispielsweise einem Smartphone des Benutzer des Fahrzeuges 2, empfängt und anfordert und basierend auf den genannten Daten einen oder mehrere Ladevorgänge in Form der Vorhersagedaten vorhersagt. Die Vorhersagedaten über die geplanten oder prognostizierten Ladevorgänge werden anschließend bevorzugt an das bezüglich mehrerer elektrischer Fahrzeuge zentrale Koordinierungssystem 16 übermittelt. Das zentrale Koordinierungssystem 16 leitet diese, beispielsweise über mehrere Fahrzeuge aggregiert, an die Netzleittechnik15 eines oder mehrerer Netzbetreiber weiter, an welchen die gemäß der Vorhersagedaten relevanten Ladevorrichtungen angebunden sind.

Wählt ein Benutzer des Fahrzeuges 2 im Navigationssystem 12 ein Ziel aus und startet die Routenführung, dann wird dieses Ziel an die Vorrichtung 1 beziehungsweise die Vorhersageeinheit 10 übermittelt beziehungsweise durch diese empfangen. Die gesendeten Zieldaten umfassen beispielsweise die Geokoordinaten des Ziels und Informationen darüber, ob das ausgewählte Ziel eine Ladestation ist.

Erkennt beispielsweise das Navigationssystem 12 nach einer Parkzeit des Fahrzeuges 2 eine Bewegung des Fahrzeuges 2, so sendet das Navigationssystem 12 dieses an das Ladevorgangsvorhersagesystem 1. Anschließend fordert das Ladevorgangsvorhersagesystem 1 das Navigationssystem 12 zur Übermittlung des aktuellen Standortes des Fahrzeuges 2, des konfigurierten und/oder gespeicherten Heimatstandortes des Fahrzeuges 2 sowie die letzten Routen auf. Hierbei kann das Navigationssystem 12 prüfen, ob der aktuelle Standort des Fahrzeuges 2 Ausgangspunkt häufiger Routen zum Heimatstandort ist. In diesem Fall kann das Ladevorgangsvorhersagesystem 1 beziehungsweise die Vorhersageeinheit 10 darauf schließen, dass das Fahrzeug 2 voraussichtlich, das heißt mit einer bestimmten Wahrscheinlichkeit, insbesondere größer 0.5, auf dem Weg zum Heimatstandort ist. Zur Berechnung der genannten Wahrscheinlichkeit, die durch die Vorhersagedaten umfasst werden kann, empfängt das Ladevorgangsvorhersagesystem weitere Daten beziehungsweise Ladeparameter, insbesondere die aktuelle Zeit, ein Zeitmuster der letzten Routen zum Heimatstandort, und/oder Kalenderdaten vom Kalendersystem 14. Weitere Daten können als Ladeparameter an die Vorrichtung 1 übermittelt werden, beispielsweise Ein-/Aus-Zustand des Fahrzeuges 2 und/oder eine aktuelle Geschwindigkeit.

Das Reservierungssystem 11 ermöglicht es, einen Ladeplatz an einer Ladestation oder einer Gruppe von Ladestationen an einem Ladeort zu reservieren. Diese Daten (Reservierungsdaten) werden mittels einer entsprechenden Anfrage durch die Vorrichtung 1 beziehungsweise die Vorhersageeinheit 10 an das Reservierungssystem 11 übermittelt.

Das Energiemanagementsystem 13 des Fahrzeuges 2 speichert und/oder umfasst Informationen über den Ladezustand und die unterstützten Ladeprofile des Fahrzeuges 2 und stellt diese Informationen über die dritte Datenschnittstelle 103 der Vorrichtung 1 beziehungsweise der Vorhersageeinheit 10 zur Verfügung. Mit anderen Worten werden die genannten Daten durch das Energiemanagementsystem 13 an die Vorhersageeinheit 10 übermittelt und durch die Vorhersageeinheit 10 empfangen.

Das Kalendersystem 14 umfasst beispielsweise einen persönliche Kalender eines Benutzers des Fahrzeuges, insbesondere seines Fahrers. Hierbei können die Kalenderdaten des Kalendersystems 14 durch die Vorhersageeinheit 10 derart verwendet werden, dass beispielsweise eine bestimmte Wahrscheinlichkeit, dass das Fahrzeug 2 auf dem Weg zu seinem Heimatstandort ist, durch die Vorhersageeinheit 10 ermittelt wird.

Die Vorrichtung 1 beziehungsweise die Vorhersageeinheit 10 ermittelt die Vorhersagedaten. Hierbei verwendet die Vorrichtung 1 beziehungsweise die Vorhersageeinheit 10 die Navigationsdaten des Navigationssystems 12, die Reservierungsdaten des Reservierungssystems und weitere Daten, beispielsweise des Energiemanagementsystems 13 und des Kalendersystems 14. Die Navigationsdaten umfassen beziehungsweise codieren beispielsweise, den Startzeitpunkt einer Fahrt, das Endziel der Fahrt, die letzten Routen sowie den aktuellen Standort des Fahrzeuges 2 und seinen Heimatstandort. Die Reservierungsdaten umfassen beispielsweise einen reservierten Zeitbereich an einer reservierten Ladestation.

Wenn die Vorrichtung 1 beziehungsweise die Vorhersageeinheit 10 gemäß den ermittelten Vorhersagedaten einen Ladevorgang des Fahrzeuges 2 an einer Ladevorrichtung vorhersagt, das heißt bestimmt hat, dann fordert die Vorhersageeinheit 10 den Ankunftszeitpunkt an der vorgesehenen Ladestation beim Navigationssystem 12 zur Übermittlung an. Weiterhin kann die Vorhersageeinheit 10 vom Energiemanagementsystem 13 die Daten bezüglich des aktuellen Ladezustandes sowie die zugehörigen Ladeprofile anfordern. Darauf basierend kann die Vorhersageeinheit 10 den Ladezustand des Fahrzeuges 2 bei seiner Ankunft an der Ladevorrichtung sowie die Distanz zur Ladevorrichtung berechnen. Weitere ladespezifische Daten, wie beispielsweise Vertragsdaten, können durch die Vorhersageeinheit 10 angefordert werden und/oder sind bereits im Reservierungssystem 11 und/oder durch das Fahrzeug 2 gespeichert und/oder auf einer seiner weiteren Systemkomponenten hinterlegt. Weiterhin können die Informationen/Daten des Kalendersystems 14 verwendet werden, um beispielsweise einen Ladevorgang vorherzusagen, der mit einem Ereignis im Kalender verknüpft ist.

Die Vorrichtung 1 und/oder die Vorhersageeinheit 10 übermittelt die Vorhersagedaten, beispielsweise über die prognostizierte Ladestation/Wallbox, die voraussichtliche Ladestartzeit (voraussichtliche Ankunftszeit an der Ladestation), den reservierten Ladeplatz, den Ladezustand, die unterstützten Lastprofile und/oder die Vertragsinformationen an ein Backend-System des Koordinierungssystems 16. Weiterhin können die Vorhersagedaten eine zugehörige Wahrscheinlichkeit des prognostizierten Ladevorgangs umfassen, die beispielsweise höher ist, wenn der Ladevorgang basierend auf einer Ladeplatzreservierung prognostiziert wurde, und beispielsweise niedriger ist, wenn der Ladevorgang basierend auf einer ausgewählten Route zu einer Ladestation prognostiziert und/oder aus letzten vergangenen Routen abgeleitet ist.

Somit bildet die Vorrichtung 1 (Ladevorgangsvorhersagesystem oder Ladelastprognosesystem) ein System zur Vorhersage von Lasten in einem Stromnetz aus, wobei hierzu Daten mehrerer Systeme innerhalb und/oder außerhalb des Fahrzeuges 2 verwendet werden, insbesondere zusätzlich Messdaten aus SCADA, Smart-Meter-Daten aus einem Zählerdatenmanagementsystem, Wetterdaten, Daten aus Verkehrsleitsystemen und/oder Verkehrsmonitoringsystemen, Satellitendaten und/oder bisherige voraussichtliche Ladevorgänge.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Vorrichtung
- 2: Fahrzeug
- 10: Vorhersageeinheit
- 11: Reservierungssystem
- 12: Navigationssystem
- 13: Energiemanagementsystem
- 14: Kalendersystem
- 15: Netzleittechnik
- 16: Koordinierungssystem
- 17: lokalen Koordinierungssystem
- 18: Vertragsdatensystem
- 101: erste Datenschnittstelle
- 102: zweite Datenschnittstelle
- 103: dritte Datenschnittstelle
- 104: vierte Datenschnittstelle

## Patentansprüche

1. Vorrichtung (1) zur Ermittlung von Vorhersagedaten eines Ladevorgangs eines elektrischen Fahrzeuges (2), umfassend eine Vorhersageeinheit (10), die dazu ausgebildet ist, basierend auf übermittelten Daten, eine Ladevorrichtung zu bestimmen und eine Startzeit sowie eine Ladedauer des Ladevorgangs an der genannten Ladevorrichtung sowie weitere Ladeparameter als Vorhersagedaten zu ermitteln, **dadurch gekennzeichnet, dass** die Vorrichtung (1) eine erste Datenschnittstelle (101) zu einem Reservierungssystem (11) und eine zweite Datenschnittstelle (102) zu einem Navigationssystem (12) des elektrischen Fahrzeuges umfasst, wobei die erste Datenschnittstelle (101) dazu ausgebildet ist, von dem Reservierungssystem (11) Reservierungsdaten bezüglich der Ladevorrichtung zu empfangen, und die zweite Datenschnittstelle (102) dazu ausgebildet ist, von dem Navigationssystem (12) Navigationsdaten über eine aktuelle oder geplante Fahrt des elektrischen Fahrzeuges (2) zu empfangen, wobei die Vorhersageeinheit (10) dazu ausgebildet ist, aus den empfangenen Reservierungsdaten und Navigationsdaten die Vorhersagedaten zu ermitteln.

2. Vorrichtung (1) gemäß Anspruch 1, **dadurch gekennzeichnet, dass** die Vorhersageeinheit (10) dazu ausgebildet ist, die ermittelten Vorhersagedaten an die Netzleittechnik (15) eines Stromnetzes, an welchem die gemäß den Vorhersagedaten ermittelte Ladevorrichtung angebunden ist, zur Netzbetriebsführung zu übermitteln.

3. Vorrichtung (1) gemäß Anspruch 1 oder 2, **dadurch gekennzeichnet, dass** die Vorhersageeinheit (10) dazu ausgebildet ist, die ermittelten Vorhersagedaten an die gemäß den Vorhersagedaten ermittelte Ladevorrichtung zu übermitteln.

4. Vorrichtung (1) gemäß einem der vorhergehenden Ansprüche, **dadurch gekennzeichnet, dass** die Reservierungsdaten einen reservierten Ladezeitbereich für die Ladevorrichtung umfassen.

5. Vorrichtung (1) gemäß einem der vorhergehenden Ansprüche, **dadurch gekennzeichnet, dass** die Navigationsdaten einen Anfangsort der Fahrt, einen Zielort der Fahrt, eine Ankunftszeit und/oder einen Startwert, dass die Ladevorrichtung festgelegt und die Navigation zur genannten Ladevorrichtung begonnen hat, umfassen.

6. Vorrichtung (1) gemäß einem der vorhergehenden Ansprüche, **dadurch gekennzeichnet, dass** die Vorhersageeinheit (10) dazu ausgebildet ist, über die erste Datenschnittstelle (101) die Reservierungsdaten vom Reservierungssystem (11) und/oder über die zweite Datenschnittstelle (102) die Navigationsdaten vom Navigationssystem (12) anzufordern.

7. Vorrichtung (1) gemäß einem der vorhergehenden Ansprüche, **dadurch gekennzeichnet, dass** die Vorrichtung eine dritte Datenschnittstelle (103) zu einem Energiemanagementsystem (13) des Fahrzeuges (2) umfasst, wobei die dritte Datenschnittstelle (103) dazu ausgebildet ist, wenigstens einen Ladezustand und/oder ein Ladeprofil des Fahrzeuges (2) als Ladeparameter zu empfangen und anzufordern.

8. Vorrichtung (1) gemäß Anspruch 7, **dadurch gekennzeichnet, dass** die Vorhersageeinheit (10) dazu ausgebildet ist, aus dem Ladezustand und den Navigationsdaten einen Ladezustand des Fahrzeuges (2) bei Ankunft des Fahrzeuges (2) an der Ladevorrichtung zu bestimmen.

9. Vorrichtung (1) gemäß einem der vorhergehenden Ansprüche, **dadurch gekennzeichnet, dass** die Vorrichtung (1) dazu ausgebildet ist, weitere ladespezifische Daten, insbesondere Schnellladedaten, als Ladeparameter zu empfangen und anzufordern.

10. Vorrichtung (1) gemäß einem der vorhergehenden Ansprüche, **dadurch gekennzeichnet, dass** die Vorrichtung (1) eine vierte Datenschnittstelle (104) zu einem Kalendersystem (14) des Fahrzeuges (2) umfasst, wobei die vierte Datenschnittstelle (104) dazu ausgebildet ist, Kalenderdaten von dem Kalendersystem (14) als Ladeparameter zu empfangen und anzufordern.

11. Elektrisches Fahrzeug (2), **dadurch gekennzeichnet, dass** das Fahrzeug (2) eine Vorrichtung (1) gemäß einem der vorhergehenden Ansprüche umfasst.

12. Elektrisches Fahrzeug (2) gemäß Anspruch 11, **dadurch gekennzeichnet, dass** das Fahrzeug (2) das Reservierungssystem (11), das Navigationssystem (12), das Energiemanagementsystem (13) und/oder das Kalendersystem (14) umfasst.

13. Verfahren zur Ermittlung von Vorhersagedaten eines Ladevorgangs eines elektrischen Fahrzeuges (2) mittels einer Vorrichtung (1) gemäß einem der Ansprüche 1 bis 10, wobei die Vorrichtung (1) eine Vorhersageeinheit (10) umfasst, die dazu ausgebildet ist, basierend auf übermittelten Daten, eine Ladevorrichtung, eine Startzeit sowie eine Ladedauer des Ladevorgangs an der genannten Ladevorrichtung und weitere Ladeparameter als Vorhersagedaten zu ermitteln, **gekennzeichnet dadurch, dass** die Vorrichtung (1) eine erste Datenschnittstelle (101) zu einem Reservierungssystem (11) und eine zweite Datenschnittstelle (102) zu einem Navigationssystem (12) des elektrischen Fahrzeuges (12) umfasst, wobei über die erste Datenschnittstelle (101) von dem Reservierungssystem Reservierungsdaten bezüglich der Ladevorrichtung empfangen werden, und über die zweite Datenschnittstelle (102) von dem Navigationssystem (12) Navigationsdaten über eine aktuelle oder geplante Fahrt des elektrischen Fahrzeuges (2) empfangen werden, wobei mittels der Vorhersageeinheit (10) aus den empfangenen Reservierungsdaten und Navigationsdaten die Vorhersagedaten ermittelt werden.

14. Verfahren gemäß Anspruch 13, **gekennzeichnet dadurch, dass** die Vorhersageeinheit (10) die ermittelten Vorhersagedaten an eine Netzleittechnik (15) eines Stromnetzes, an welchem die gemäß den Vorhersagedaten ermittelte Ladevorrichtung angebunden ist, zur Netzbetriebsführung übermittelt.

15. Verfahren gemäß Anspruch 14, **gekennzeichnet dadurch, dass** das basierend auf den übermittelten Vorhersagedaten eine Netzbetriebsführung des Stromnetzes erfolgt.
